# EUROPÄISCHE PATENTANMELDUNG

(11) **EP 2 111 029 A2**
(43) Veröffentlichungstag der Anmeldung: **21.10.2009**
(21) Anmeldenummer: 08010268.4
(22) Anmeldetag: 05.06.2008
(51) Int. Cl.: H04M 3/51

(54) **Telefonanruf- und Telefonabrechnungsverfahren und computergestütztes Dialogsystem**

(30) Priorität: 06.06.2007 DE 102007026293
(71) Anmelder: Mcn tele.com AG, 61352 Bad Homburg (DE)
(72) Erfinder: Rabe, Stefan, 61348 Bad Homburg (DE)
(74) Vertreter: Thum, Bernhard

(57) **Zusammenfassung**

Die Erfindung betrifft ein Telefonanruf- und Telefonabrechnungsverfahren. Das Verfahren weist gemäß einer Ausführungsform die Verfahrensschritte Initiieren eines Anrufes (1) von einem computergestützten Dialogsystem (IVR) an eine Teilnehmerendeinrichtung (TE), Ausgeben einer Mitteilung (2) des computergestützten Dialogsystems (IVR) in der Teilnehmerendeinrichtung (TE) und Senden eines Bestätigungssignals (3) als Antwort auf die Mitteilung (2) von der Tellnehmerendeinrichtung (TE) and das computergestützte Dialogsystem (IVR), wobei der Empfang des Bestätigungssignals (3) in dem computergestützten Dialogsystem (IVR) eine Aufzeichnung von Verbindungsdaten initiiert, auf.

## Beschreibung

Die vorliegende Erfindung betrifft ein Telefonanruf- und Telefonabrechungsverfahren. Die Erfindung betrifft ferner ein computergestütztes Dialogsystem.

Heutzutage werden eine Vielzahl von Dienstleistungen über das Telefon angeboten. So sind beispielsweise Beratungsdienstleistungen zu Fachthemen oder Produktunterstützungen, sogenannte "Hotlines", über das Telefon abrufbar. Solche Telefondienstleistungen werden meist über die Telefonrechung des Anrufers abgerechnet. Beispielsweise hat ein Anrufer einer Telefon-Hotline zum einen ein Entgelt, welches für den Teilnehmernetzbetreiber, der die Telefonverbindung bereitstellt, bestimmt ist, zu begleichen, zum anderen werden ihm aber auch die Kosten für die Dienstleistung in Rechnung gestellt. Die Kosten des Dienstleistungsanbieters werden sofort an den Teilnehmernetzbetreiber weitergeleitet, wobei der Teilnehmernetzbetreiber in Abhängigkeit von der Dauer des Telefongesprächs und einem vorgegebenen Tarif die Kosten für den Dienstleistungsanbieter berechnet. Die Kosten des Teilnehmernetzbetreibers und die Kosten des Dienstleistungsanbieters werden dem Anrufer über seine monatliche Telefonrechnung in Rechnung gestellt.

Das bekannte Telefonabrechnungsverfahren hat jedoch den Nachteil, dass der Kunde den Anruf initiieren muss. Der Dienstleistungsanbieter ist somit darauf angewiesen, dass der Kunde bei ihm anruft. Bei Anbietern von Telefondienstleistungen besteht jedoch oft die Notwendigkeit, dass der Dienstleistungsanbieter einen Kunden anruft. Dies kann damit zusammenhängen, dass der Kunde den Dienstleistungsanbieter schriftlich aufgefordert hat, ihn über bestimmte Ereignisse, beispielsweise einen Gewinn bei einer Verlosung, zu unterrichten. Für einen solchen Fall gibt es jedoch kein einfaches und nutzerfreundliches Verfahren, welches eine In-Rechnung-Stellung der für die Dienstleitung anfallenden Kosten ermöglicht. Darüber hinaus ist es für den Dienstleistungsanbieter nicht möglich, seine Kosten variabel zu gestalten. Der Teilnehmernetzbetreiber berechnet für den Dienstleistungsanbieter nach Zeit des Telefonanrufs und vorgegebenem Tarif. Bei dem bekannten sogenannten "Online-Abrechnungsverfahren" hat der Dienstleistungsanbieter keine Möglichkeit, seine Rechnung an den Kunden individuell zu gestalten.

Es ist demgegenüber eine Aufgabe der vorliegenden Erfindung, ein Telefonanruf- und Telefonabrechnungsverfahren der eingangs bezeichneten Art bereitzustellen, bei dem auf einfache, flexible und kostengünstige Weise, Kosten die mit dem Anruf verbunden sind dem Kunden in Rechnung gestellt werden können.

Es ist ferner eine Aufgabe der vorliegenden Erfindung, ein computergestütztes Dialogsystem bereitzustellen, welches bei einem Telefonanruf- und Telefonabrechnungsverfahren der eingangs bezeichneten Art verwendet werden kann.

Hinsichtlich des Telefonanrufs- und Telefonabrechnungsverfahrens wird diese Aufgabe durch ein Telefonanruf- und Telefonabrechnungsverfahren gelöst, welches die Verfahrensschritte Initiieren eines Anrufs von einem computergestützten Dialogsystem an eine Teilnehmerendeinrichtung, Ausgeben einer Mitteilung des computergestützten Dialogsystems in der Teilnehmerendeinrichtung und Senden eines Bestätigungssignals als Antwort auf die Mitteilung von der Teilnehmerendeinrichtung an das computergestützte Dialogsystem, wobei der Empfang des Bestätigungssignals in dem computergestützten Dialogsystem eine Aufzeichnung von Verbindungsdaten initiiert, aufweist.

Mit dem Telefonanruf- und Telefonabrechnungsverfahren gemäß der vorliegenden Erfindung wird somit unabhängig von einer Initiierung eines Anrufs durch einen Nutzer ein Anruf an eine Teilnehmerendeinrichtung initiiert. Der Anruf erfolgt mit Hilfe eines computergestützten Dialogsystems. Bei dem computergestützten Dialogsystem handelt es sich bevorzugt um ein auf einem Computer laufendes Computerprogramm mit Programmcode, welches alle Funktionen des erfindungsgemäßen Telefonanruf- und Telefonabrechnungsverfahrens ausführt. Der Computer weist ferner bevorzugt eine Schnittstelle zum Empfangen und Initiieren von Telefonanrufen auf. Der Einsatz eines computergestützten Dialogsystems hat den Vorteil, dass auf Seite des Anrufenden kein(e) Telefonist(in) notwendig ist. Dies hat für den Telefondienstleistungsanbieter erhebliche Kostenvorteile. Die Teilnehmerendeinrichtung wird von einem Nutzer bedient. Nach Annahme des Anrufs durch den Nutzer der Teilnehmerendeinrichtung wird eine von dem computergestützten Dialogsystem generierte Mitteilung an die Teilnehmerendeinrichtung ausgegeben. Bei der Mitteilung kann es sich beispielsweise um eine Benachrichtigung eines Gewinns handeln. Für im Zusammenhang mit dem Telefonat stehende Leistungen können Kosten mit Hilfe des erfindungsgemäßen Verfahrens abgerechnet werden. Bei der Teilnehmerendeinrichtung kann es sich grundsätzlich um jede Art von Telekommunikationsendgerät, wie beispielsweise Festnetz-, Drahtlos- oder Voice-over-IP - Telefon, handeln. Nach Empfang der Mitteilung des computergestützten Dialogsystems in der Teilnehmerendeinrichtung kann der Nutzer der Teilnehmerendeinrichtung ein Bestätigungssignal an das computergestützte Dialogsystem senden. Beispielsweise bestätigt der Nutzer der Teilnehmerendeinrichtung, dass er mit der Übernahme der Kosten für die im Zusammenhang mit dem Telefonat erbrachten Leistungen einverstanden ist. Gemäß einer vorteilhaften Weiterbildung der Erfindung kann der Nutzer der Teilnehmerendeinrichtung aus mehreren Optionen auswählen und ein seiner Auswahl entsprechendes Bestätigungssignal an das computergestützte Dialogsystem senden. Beispielsweise bietet das computergestützte Dialogsystem dem Nutzer der Teilnehmerendeinrichtung unterschiedliche Zustellungswege für die Zustellung eines Gutscheins mit unterschiedlichen Kosten an.

Das computergestützte Dialogsystem wartet sodann auf den Empfang des Bestätigungssignals. Der Empfang des Bestätigungssignals von der Teilnehmerendeinrichtung in dem computergestützten Dialogsystem initiiert eine Aufzeichnung von Verbindungsdaten. Die Verbindungsdaten können beispielsweise die Zeitdauer des Telefonats von dem Zeitpunkt des Empfangs des Bestätigungssignals, kunden- und/oder dienstleistungsspezifische Daten umfassen. Mit Hilfe der Verbindungsdaten ist es möglich, eine Abrechnung für die Dauer des Telefonats nach Empfang des Bestätigungssignals zu generieren. Für den Fall, dass kein Bestätigungssignal in dem computergestützten Dialogsystem empfangen wird, oder dass nach Ablauf eines vorgegebenen Zeitintervalls kein Bestätigungssignal in dem computergestützten Dialogsystem empfangen wird, erfolgt keine Aufzeichnung von Verbindungsdaten bzw. aufgezeichnete Verbindungsdaten werden verworfen. Mit dem erfindungsgemäßen Telefonanruf- und Telefonabrechungsverfahren ist es somit möglich, mit Hilfe der aufgezeichneten Verbindungsdaten eine individuelle Abrechnung zu erstellen. Das erfindungsgemäße Telefonanruf- und Telefonabrechungsverfahren kann ausschließlich bei einem sogenannten "Offline Abrechnungsverfahren" eingesetzt werden. D.h., die Verbindungsdaten werden nicht sofort an den Teilnehmernetzbetreiber weitergeleitet, sondern können vor Weiterleitung an den Teilnehmernetzbetreiber durch den Dienstleistungsanbieter gemäß der gesetzlichen Vorschriften weiter verarbeitet bzw. in Abhängigkeit von der durch die Teilnehmerendeinrichtung angeforderten Dienstleistung angepasst werden. Je nach gewünschter Dienstleistung kann individuell abgerechnet werden.

Gemäß einer vorteilhaften Ausführungsform der Erfindung werden die Verbindungsdaten ab dem Zeitpunkt des Empfangs des Bestätigungssignals aufgezeichnet. Durch diese Aufzeichnung ist es möglich, ab dem Zeitpunkt des Empfangs des Bestätigungssignals dem Anruf Daten zuzuordnen. Diese Daten können Abrechnungsdaten umfassen. Dadurch ist es möglich, den ursprünglichen Anruf von dem computergestützten Dialogsystem an die Teilnehmerendeinrichtung für den Teilnehmer kostenlos zu gestalten, wobei nach Empfang eines Bestätigungssignals als Antwort auf eine Mitteilung eine kostenpflichtige Abrechnung der mit Hilfe des Telefonanrufs bereitgestellten Dienstleistungen möglich ist.

In einer bevorzugten Ausführungsform werden die Verbindungsdaten in einer Anrufdatenbank gespeichert. Diese Anrufdatenbank kann von dem computergestützten Dialogsystem bereitgestellt werden. Bei der Datenbank kann es sich beispielsweise um eine sogenannte "Structured Query Language" (SQL) Datenbank handeln.

In einer bevorzugten Ausführungsform werden die Verbindungsdaten an eine Abrechnungsdatenbank übertragen. In der Abrechnungsdatenbank werden die Verbindungsdaten durch Tarifinformationen ergänzt und somit zu Leistungsdatensätzen verknüpft. Bei den Abrechnungsdaten kann es sich um eine in dem computergestützten Dialogsystem befindliche Datenbank oder um eine separate Datenbank handeln. Die Datenbank kann beispielsweise als SQL Datenbank ausgeführt sein.

Die eingangs gestellte Aufgabe wird auch durch ein Telefonanruf- und Telefonabrechnungsverfahren gelöst, welches die Verfahrensschritte Initiieren eines Anrufs von einem computergestützten Dialogsystem an eine Teilnehmerendeinrichtung, Ausgeben einer Mitteilung des computergestützten Dialogsystems in der Teilnehmerendeinrichtung und Senden eines Bestätigungssignals als Antwort auf die Mitteilung von der Teilnehmerendeinrichtung an das computergestützte Dialogsystem, wobei der Empfang des Bestätigungssignals in dem computergestützten Dialogsystem eine Anrufweiterleitung initiiert, aufweist. Nach dieser erfindungsgemäßen Ausführungsform wird ein Anruf ohne direktes menschliches Zutun von einem computergestützten Dialogsystem an eine Teilnehmerendeinrichtung initiiert. Der Anruf umfasst eine Mitteilung des computergestützten Dialogsystems an die Teilnehmerendeinrichtung. Auf die Mitteilung des computergestützten Dialogsystems kann der Nutzer der Teilnehmerendeinrichtung ein Bestätigungssignal an das computergestützte Dialogsystem übermitteln. Nach Empfang des Bestätigungssignals in dem computergestützten Dialogsystem leitet das computergestützte Dialogsystem den Anruf weiter. Durch die Anrufweiterleitung ist es möglich, von dem Zeitpunkt der Anrufweiterleitung dem weitergeleiteten Anruf unterschiedliche Parameter zuzuordnen. So kann beispielsweise ab dem Zeitpunkt der Anrufweiterleitung der weitergeleitete Anruf separat berechnet werden. Dies bedeutet, mit dem erfindungsgemäßen Verfahren ist es möglich, den ursprünglichen Anruf des computergestützten Dialogsystems an die Teilnehmerendeinrichtung für den Nutzer der Teilnehmerendeinrichtung kostenlos zu gestalten, wobei nach Senden eines Bestätigungssignals, beispielsweise nach einer Anforderung von Telefonberatungsdienstleistungen, Kosten abgerechnet werden können.

Gemäß einer vorteilhaften Ausführungsform der Erfindung initiiert der weitergeleitete Anruf eine Aufzeichnung von Verbindungsdaten. Ab dem Zeitpunkt der Weiterleitung des Anrufs können erfindungsgemäß Verbindungsdaten zur späteren weiteren Verarbeitung aufgezeichnet werden.

Gemäß einer vorteilhaften Weiterbildung der Erfindung wird ein Bestätigungssignal von dem computergestützten Dialogsystem an die Teilnehmerendeinrichtung gesendet. Dieses Bestätigungssignal, wird nachdem das computergestützte Dialogsystem das Bestätigungssignal als Antwort auf die Mitteilung von der Teilnehmerendeinrichtung an das computergestützte Dialogsystem empfangen wurde, an die Teilnehmerendeinrichtung gesendet. Das Bestätigungssignal ermöglicht es, dem Nutzer der Teilnehmerendeinrichtung mitzuteilen, dass das Bestätigungssignal in dem computergestützten Dialogsystem empfangen wurde. Beispielsweise ist es denkbar, dass das an die Teilnehmerendeinrichtung gesendete Bestätigungssignal eine Nachricht enthält, welche dem Nutzer der Teilnehmerendeinrichtung mitteilt, dass ab diesem Zeitpunkt Kosten für angeforderte Telefonberatungsdienstleistungen anfallen, oder dass die Telefonberatungsdienstleistungen erfolgreich gestartet werden.

Gemäß einer bevorzugten Ausführungsform der Erfindung erfolgt das Senden des Bestätigungssignals als Antwort auf die Mitteilung, mit Hilfe eines Doppeltonmehrfrequenzverfahrens. Beispielsweise kann der Nutzer des Teilnehmerendgeräts über die alphanumerische Tastatur des Teilnehmerendgeräts eine Zahlenkombination eingeben, welche dem computergestützten Dialogsystem eine Bestätigung signalisiert. Mit Hilfe des Doppeltonmehrfrequenzsignals ist es möglich, dass das computergestützte Dialogsystem ohne direkte menschliche Hilfe ein Signal von der Teilnehmerendeinrichtung empfängt und dieses auswerten kann. Hierbei wird sichergestellt, dass das computergestützte Dialogsystem nur aktive Eingaben an der Teilnehmerendeinrichtung als solche erkennt und auswertet.

Gemäß einer weiteren bevorzugten Ausführungsform der vorliegenden Erfindung erfolgt die Verarbeitung des Bestätigungssignals als Antwort auf die Mitteilung in dem computergestützten Dialogsystem mit Hilfe eines Spracherkennungsverfahrens. So kann beispielsweise das computergestützte Dialogsystem ein Spracherkennungs-Computerprogramm umfassen, welches Spracheingaben in das Mikrophon der Teilnehmerendeinrichtung empfangen und auswerten kann. Beispielsweise kann der Nutzer der Teilnehmerendeinrichtung eine Aufforderung, ob er eine Telefondienstleistung nutzen will, mit der Spracheingabe "JA" beantworten. Diese Spracheingabe wird von dem computergestützten Dialogsystem empfangen und ausgewertet. Das computergestützte Dialogsystem erkennt dabei, dass der Nutzer der Teilnehmerendeinrichtung damit einverstanden ist, dass sich der Status des Telefonanrufs ändert. Das erfindungsgemäße Spracherkennungsverfahren kann alternativ oder in Kombination mit dem Doppeltonmehrfrequenzverfahren verwendet werden.

Gemäß einer weiteren vorteilhaften Ausführungsform der Erfindung wird vor dem Initiieren des Anrufs durch das computergestützte Dialogsystem überprüft, ob es sich bei der anzurufenden Nummer, um eine Festnetznummer oder eine Mobilfunknummer handelt. Beispielsweise kann es notwendig sein, in Abhängigkeit von festgelegten Tarifgruppen, Mobilfunkrufnummern von dem erfindungsgemäßen Verfahren auszuschließen.

Bevorzugt wird das erfindungsgemäße Verfahren von einem Computerprogramm mit Programmcode in einem Computer ausgeführt.

Das Computerprogramm mit Programmcode kann bevorzugt auf einem maschinenlesbaren Träger zur Durchführung in einem Computer gespeichert sein.

Die eingangs gestellte Aufgabe wird ferner durch ein computergestütztes Dialogsystem gelöst, das Mittel zum Initiieren eines Anrufs an eine Teilnehmerendeinrichtung, Mittel zum Senden einer Mitteilung an die Teilnehmerendeinrichtung, Mittel zum Empfangen eines Bestätigungssignals als Antwort auf die Mitteilung von der Teilnehmerendeinrichtung an das computergestützte Dialogsystem und Mittel zum Aufzeichnen von Verbindungsdaten als Reaktion auf den Empfang des Bestätigungssignals, aufweist.

Die eingangs gestellte Aufgabe wird auch durch ein computergestütztes Dialogsystem gelöst, das Mittel zum Initiieren eines Anrufs an eine Teilnehmerendeinrichtung, Mittel zum Senden einer Mitteilung an die Teilnehmerendeinrichtung, Mittel zum Empfangen eines Bestätigungssignals als Antwort auf die Mitteilung von der Teilnehmerendeinrichtung an das computergestützte Dialogsystem und Mittel zum Initiieren einer Anrufweiterleitung als Reaktion auf den Empfang des Bestätigungssignals, aufweist.

In einer bevorzugten Ausführungsform weist das computergestützte Dialogsystem eine Anrufdatenbank, in der Verbindungsdaten gespeichert werden können, auf.

In einer weiteren bevorzugten Ausführungsform der Erfindung weist das computergestützte Dialogsystem eine Abrechnungsdatenbank auf, in der Verbindungsdaten durch Tarifinformationen ergänzt und somit zu Leistungsdatensätzen verknüpft werden können.

Die Erfindung wird im Folgenden anhand der beiliegenden Figur erläutert. Es stellt dar:

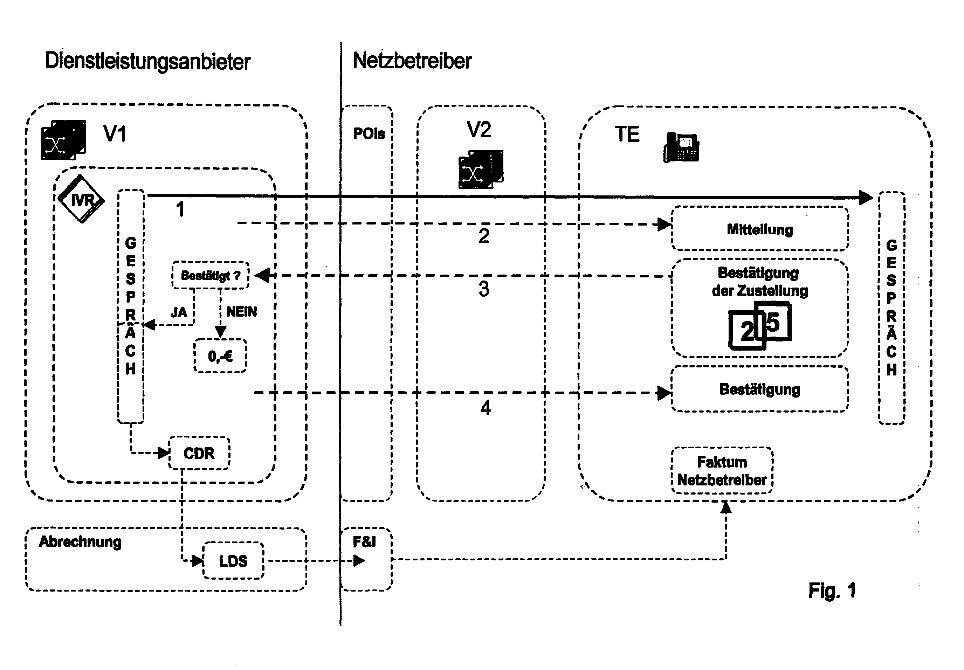

- Figur 1: eine schematische Darstellung einer Ausführungsform des erfindungsgemäßen Telefonanruf- und Telefonabrechnungsverfahrens.

Figur 1 zeigt schematisch den Ablauf einer Ausführungsform des erfindungsgemäßen Telefonanruf- und Telefonabrechnungsverfahrens. An dem Verfahren sind mindestens ein Dienstleistungsanbieter, ein Teilnehmernetzbetreiber und eine Teilnehmerendeinrichtung TE beteiligt. Der Dienstleistungsanbieter weist eine Vermittlungseinrichtung V1 auf. Die Vermittlungseinrichtung V1 umfasst ein computergestütztes Dialogsystem IVR. Das computergestützte Dialogsystem IVR umfasst eine Datenbank CBR zum Speichern von Verbindungsdaten. Des weiteren ist dem Dienstleistungsanbieter eine Abrechnungsdatenbank mit darin enthaltenen Leistungsdatensätzen LDS zugeordnet.

Der Teilnehmernetzbetreiber weist in seinem Netz eine Vielzahl von Netzzusammenschaltungspunkten POI auf, welche einen Netzübergang von dem Netz des Dienstleistungsanbieters in das Netz des Teilnehmernetzbetreibers ermöglichen. Gehen Anrufe in das Netz des Teilnehmernetzbetreibers über die Netzzusammenschaltungspunkte POI ein, so können diese mit Hilfe einer Vermittlungseinrichtung V2 an eine Teilnehmerendeinrichtung TE weitergeleitet werden.

Zu Beginn des erfindungsgemäßen Telefonanruf- und Telefonabrechnungsverfahrens ruft das computergestützte Dialogsystem IVR automatisch eine Teilnehmerendeinrichtung TE an, wie dies durch den Pfeil 1 angedeutet ist. Nach Annahme des Anrufes durch den Nutzer der Teilnehmerendeinrichtung TE wird eine Anrufverbindung aufgebaut. Anschließend teilt das computergestützte Dialogsystem dem Nutzer der Teilnehmerendeinrichtung eine Mitteilung mit. Beispielsweise kann es sich bei der Mitteilung um eine Benachrichtigung über den Gewinn von Reisegutscheinen bzw.

Bargeld in Form eines Schecks handeln. Die Mitteilung enthält ferner einen Hinweis auf mögliche Kosten, die in Verbindung mit der Telefondienstleistung stehen, insofern der Anrufer die Leistung ausdrücklich in Anspruch nehmen möchte. Diese Mitteilung ist in Figur 1 durch den gestrichelten Pfeil 2 dargestellt. Wie durch den gestrichelten Pfeil 3 ersichtlich, bestätigt der Nutzer der Teilnehmerendeinrichtung durch Eingabe der Ziffern beispielsweise "2" und "5" über die Tastatur der Teilnehmerendeinrichtung mit Hilfe eines Doppeltonmehrfrequenzverfahrens die Annahme der Zahlung. Nach Empfang der Bestätigung 3 in dem computergestützten Dialogsystem IVR werden Verbindungsdaten in der Datenbank CDR gespeichert (JA). Die Speicherung der Verbindungsdaten erfolgt ab dem Zeitpunkt des Eingangs der positiven Bestätigung der Zustellung 3. Falls eine negative Antwort auf die Mitteilung 2 in dem computergestützten Dialogsystem eingeht (NEIN), bzw. falls nach Ablauf eines vorbestimmten Zeitintervalls keine positive Bestätigungsnachricht in dem computergestützten Dialogsystem eingeht, erfolgt keine Speicherung von Verbindungsdaten in der Datenbank CDR. Dies bedeutet, dass keine Berechnung eines Service-/Zustellungsentgelts stattfindet und somit auch keine Zusendung des Gutscheins gewünscht ist.

Die in der Datenbank CDR gespeicherten Verbindungsdaten werden an eine Abrechnungsdatenbank übertragen und dort mit Tarifinformationen ergänzt und somit zu Leistungsdatensätzen LDS verknüpft. Diese Leistungsdatensätze umfassen Tarifinformationen, mit deren Hilfe es möglich ist, den gespeicherten Verbindungsdaten Kosten zuzuweisen. Die Kosten werden an den Teilnehmernetzbetreiber, wie durch den Block F&I angedeutet, weitergeleitet und der Teilnehmernetzbetreiber stellt seine Netzkosten und die Kosten des Dienstleistungsanbieters dem Nutzer der Teilnehmerendeinrichtung in Rechnung (Faktum Teilnehmernetzbetreiber). Vor Übermittlung der Kosten an den Teilnehmernetzbetreiber ist es somit möglich, mit Hilfe eines Offline-Abrechnungsverfahrens, die zu berechneten Kosten individuell zu bearbeiten. So werden die Verbindungsdatensätze zuerst durch den Dienstleistungsanbieter verarbeitet und/und modifiziert und anschließend an den Teilnehmernetzbetreiber weitergeleitet.

Somit ist es erfindungsgemäß möglich, automatisch mit Hilfe eines computergestützten Dialogsystems IVR registrierte Kunden zu kontaktieren und ihnen kostenpflichtige Dienstleistungen anzubieten. Dabei wird vermieden, dass der Kunde den Telefonanruf initiieren muss. Ferner ist es erfindungsgemäß möglich, flexibel und individuell Kosten für von dem Dienstleistungsanbieter angebotene Dienstleistungen dem Kunden in Rechnung zu stellen.

## Patentansprüche

1. Telefonanruf- und Telefonabrechnungsverfahren mit den Verfahrensschritten:
- Initiieren eine Anrufs (1) von einem computergestützten Dialogsystem (IVR) an eine Teilnehmerendeinrichtung (TE),
- Ausgeben einer Mitteilung (2) des computergestützten Dialogsystems (IVR) in der Teilnehmerendeinrichtung (TE), und
- Senden eines Bestätigungssignals (3) als Antwort auf die Mitteilung (2) von der Teilnehmerendeinrichtung (TE) an das computergestützte Dialogsystem (IVR), wobei der Empfang des Bestätigungssignals (3) in dem computergestützten Dialogsystem (IVR) eine Aufzeichnung von Verbindungsdaten initiiert.

2. Verfahren nach Anspruch 1, bei dem die Verbindungsdaten ab dem Zeitpunkt des Empfangs des Bestätigungssignals (3) aufgezeichnet werden.

3. Verfahren nach einem der Ansprüche 1 oder 2, bei dem die Verbindungsdaten in einer Anrufdatenbank (CDR) gespeichert werden.

4. Verfahren nach einem der Ansprüche 1 bis 3, bei dem die Verbindungsdaten an eine Abrechnungsdatenbank übertragen und in der Abrechnungsdatenbank mit Tarifinformationen ergänzt und somit zu Leistungsdatensätzen (LDS) verknüpft werden.

5. Telefonanruf- und Telefonabrechnungsverfahren mit den Verfahrensschritten:
- Initiieren eine Anrufs (1) von einem computergestützten Dialogsystem (IVR) an eine Teilnehmerendeinrichtung (TE),
- Ausgeben einer Mitteilung (2) des computergestützten Dialogsystems (IVR) in der Teilnehmerendeinrichtung (TE), und
- Senden eines Bestätigungssignals (3) als Antwort auf die Mitteilung (2) von der Teilnehmerendeinrichtung (TE) an das computergestützte Dialogsystem (IVR), wobei der Empfang des Bestätigungssignals (3) in dem computergestützten Dialogsystem (IVR) eine Anrufweiterleitung initiiert.

6. Verfahren nach Anspruch 5, bei dem der weitergeleitete Anruf eine Aufzeichnung von Verbindungsdaten initiiert.

7. Verfahren nach Anspruch 6, bei dem die Verbindungsdaten ab dem Zeitpunkt des Empfangs des Bestätigungssignals (3) aufgezeichnet werden.

8. Verfahren nach einem der Ansprüche 6 oder 7, bei dem die Verbindungsdaten in einer Anrufdatenbank (CDR) gespeichert werden.

9. Verfahren nach einem der Ansprüche 6 bis 8, bei dem die Verbindungsdaten an eine Abrechnungsdatenbank übertragen und in der Abrechnungsdatenbank mit Tarifinformationen ergänzt und somit zu Leistungsdatensätzen (LDS) verknüpft werden.

10. Verfahren nach einem der vorhergehenden Ansprüche, bei dem ein Bestätigungssignal (4) von dem computergestützten Dialogsystem (IVR) and die Teilnehmerendeinrichtung (TE) gesendet wird.

11. Verfahren nach einem der vorhergehenden Ansprüche, bei dem das Senden des Bestätigungssignals (3) als Antwort auf die Mitteilung (2) mit Hilfe eines Doppeltonmehrfrequenzverfahrens (DTMF) erfolgt.

12. Verfahren nach einem der Ansprüche 1 bis 11, bei dem die Verarbeitung des Bestätigungssignals (3) als Antwort auf die Mitteilung (2) in dem computergestützten Dialogsystem (IVR) mit Hilfe eines Spracherkennungsverfahrens erfolgt.

13. Verfahren nach einem der vorhergehenden Ansprüche, bei dem vor dem Initiieren des Anrufs (2) überprüft wird, ob es sich bei der anzurufenden Nummer um eine Festnetznummer oder eine Mobilfunknummer handelt.

14. Computerprogramm mit Programmcode zur Durchführung aller Verfahrensschritte nach einem der Ansprüche 1 bis 13, wenn das Computerprogramm in einem Computer ausgeführt wird.

15. Computerprogramm mit Programmcode, der auf einem maschinenlesbaren Träger gespeichert ist, zur Durchführung aller Verfahrensschritte nach einem der Ansprüche 1 bis 13, wenn das Computerprogramm in einem Computer ausgeführt wird.

16. Computergestütztes Dialogsystem, aufweisend
- Mittel zum Initiieren eines Anrufs an eine Teilnehmerendeinrichtung (TE),
- Mittel zum Senden einer Mitteilung (2) an die Teilnehmerendeinrichtung (TE),
- Mittel zum Empfangen eines Bestätigungssignals (3) als Antwort auf die Mitteilung (2) von der Teilnehmerendeinrichtung (TE) an das computergestützte Dialogsystem (IVR), und
- Mittel zum Aufzeichnen von Verbindungsdaten als Reaktion auf den Empfang des Bestätigungssignals (3).

17. Computergestütztes Dialogsystem, aufweisend
- Mittel zum Initiieren eines Anrufs an eine Teilnehmerendeinrichtung (TE),
- Mittel zum Senden einer Mitteilung (2) an die Teilnehmerendeinrichtung (TE),
- Mittel zum Empfangen eines Bestätigungssignals (3) als Antwort auf die Mitteilung (2) von der Teilnehmerendeinrichtung (TE) an das computergestützte Dialogsystem (IVR), und
- Mittel zum Initiieren einer Anrufweiterleitung als Reaktion auf den Empfang des Bestätigungssignals (3).

18. Computergestütztes Dialogsystem nach einem der Ansprüche 16 oder 17, aufweisend eine Anrufdatenbank (CDR), in der Verbindungsdaten gespeichert werden.

19. Computergestütztes Dialogsystem nach Anspruch 18, aufweisend eine Abrechnungsdatenbank, in der die Verbindungsdaten mit Tarifinformationen ergänzt und somit zu Leistungsdatensätzen (LDS) verknüpft werden.
